# FASCICULE DE BREVET EUROPEEN

(11) **EP 0 487 398 B1**
(45) Date de publication et mention de la délivrance du brevet: **20.09.1995**
(21) Numéro de dépôt: 91403097.8
(22) Date de dépôt: 18.11.1991
(51) Int. Cl.: H02G 1/02

(54) **Nacelle héliportée modulable, destinée à être déposée sur des câbles aériens**
Hubschrauber-getragener, modularer Arbeitskorb zum Aufsetzen auf Freileitungen
Helicopter-carried modular workbasket to be put on power lines

(30) Priorité: 19.11.1990 FR 9014365
(43) Date de publication de la demande: 27.05.1992
(73) Titulaire: ELECTRICITE DE FRANCE Service National, 75008 Paris (FR)
(72) Inventeur: de Forges de Parny, Robert, F-13950 Cadolive (FR); Moudin, Gérard, F-73200 Pallud (FR); Ruaux, Philippe, F-13340 Rognac (FR)
(74) Mandataire: Signore, Robert

(56) Documents cités:
- US-A- 3 863 736
- US-A- 4 478 312

## Description

### DOMAINE DE L'INVENTION

L'invention concerne les travaux et les aménagements des câbles aériens, tels que les câbles utilisés pour le transport et la distribution de l'énergie électrique. L'invention peut également s'appliquer à des câbles de moyens de transport, tels que les téléphériques et autres cabines portées par des câbles.

### ART ANTERIEUR

Tous ces câbles aériens nécessitent, une fois installés, de nombreuses opérations d'entretien, de réparation et d'aménagement. En effet, dans le cadre des programmes d'entretien et d'aménagement du réseau de distribution électrique, l'Electricité de France doit assurer de nombreuses interventions diverses. Par exemple, la pose de balises ou d'entretoises destinées à maintenir à une distance constante deux câbles électriques, le remplacement de manchons de jonction sur des conducteurs en faisceau nécessitent une intervention humaine sur les câbles ou la pose au sol de ces câbles. Le premier type d'intervention consiste à gravir un pylône voisin et à progresser le long des câbles, cette opération étant évidemment très périlleuse. Le deuxième type d'intervention est extrêmement long et coûteux.

Il est de plus très fréquent d'avoir à poser sur des câbles aériens des balises de couleur ou luminescentes, d'un diamètre de l'ordre du mètre, et destinées à la signalisation des câbles aériens aux avions et hélicoptères devant évoluer dans l'espace aérien proche de ces câbles.

L'invention vise à faciliter, à améliorer et à accélérer ce type d'intervention sur n'importe quel type de câble aérien.

D'autre part, le brevet US-A-4 478 312 décrit un système de cages portables pour l'entretien des lignes électriques du réseau public de distribution d'électricité.

Comme le montre la figure 1 de ce document US-A- 4478312, le système est constitué de deux nacelles séparées, reliées par une structure métallique (20) et suspendues à un hélicoptère au moyen d'un câble ou d'un élément de liaison équivalent (10).

Les nacelles sont constituées d'une structure métallique complétée de treillis métalliques constituant une cage à l'intérieur de laquelle évoluent un ou plusieurs opérateurs. Au milieu de la structure se trouvent des pièces en V destinées à recevoir les câbles et à permettre le support des deux nacelles sur les câbles électriques. Les V peuvent éventuellement être complétées de galets.

De plus, le brevet US-A-3 863 736 décrit une plate-forme et un échaffaudage destiné à être héliportés et fixés sur un pylône au moyen de crochets prévus à cet effet. Ensuite, un ou plusieurs opérateurs sont débarqués de l'hélicoptère sur la plate-forme prévue sur l'échaffaudage. On peut remarquer que cet ensemble n'est pas fixé à un élément porteur, mais est fixé directement à l'hélicoptère. L'échaffaudage a une largeur inférieure à la distance entre les câbles.

### RESUME DE L'INVENTION

Un premier objet de l'invention est donc constitué par une nacelle héliportée modulable, déposée et suspendue entre deux câbles aériens rapprochés d'une distance déterminée, la nacelle ayant une largeur légèrement inférieure à cette distance déterminée et comprenant des moyens de fixation aux câbles aériens constitués d'encoches renversées pour recevoir les câbles, et placées latéralement par rapport à la partie supérieure de la structure. Le caractère modulable de la nacelle selon l'invention se concrétise par le fait qu'au moins une des deux parois d'extrémité est constituée d'un treillis métallique monté pivotant par rapport au plancher, pour s'abaisser et constituer un prolongement du plancher. Une intervention humaine, rapide est ainsi possible sur les câbles aériens pouvant supporter le poids d'une telle nacelle.

La réalisation préférentielle de la nacelle selon l'invention prévoit que celle-ci est constituée principalement d'une structure métallique parallélépipédique comportant un plancher pour permettre la présence d'un ou plusieurs opérateurs.

Une telle réalisation peut être avantageusement complétée de crochets destinés à enfermer le câble entre ces crochets et les encoches renversées afin d'assurer la sustentation de la nacelle en cas de mouvements inopinés et intempestifs des câbles.

Une telle prolongation se complète avantageusement à chaque extrémité des parois d'extrémités de deux câbles de positionnement pour limiter le basculement de cette paroi d'extrémité et la positionner dans le prolongement du plancher.

Selon un aspect de l'invention, l'extrémité de ces parois d'extrémité est équipée d'un élément de fixation avec un autre élément de fixation d'une autre structure telle qu'une passerelle devant être fixée à la nacelle.

La nacelle selon l'invention peut également comporter des barres de guidage placées en dessous de celle-ci et formant un volume dont la section horizontale épouse progressivement la forme du fond de la nacelle, pour écarter les deux câbles aériens lors de la descente de la nacelle entre ceux-ci.

De préférence, deux barres de guidage diamétralement opposées sont bombées pour favoriser la rotation de la nacelle en créant un mouvement d'hélice.

Dans ce cas, on peut également utiliser une tige verticale de guidage escamotable prolongeant, en position sortie, le volume des barres de guidage et pouvant être sortie manuellement à partir d'une position rentrée.

Un deuxième objet principal de l'invention est un dispositif comprenant une passerelle rigide constituée d'un plancher, limité par deux extrémités, et fixée par ses deux extrémités à deux nacelles, du type de celle qui vient d'être résumée, et comprenant des moyens de fixation du plancher placés à chaque extrémité de celui-ci, pour être fixés à l'extrémité basculée d'une paroi d'extrémité des deux nacelles.

De préférence, ces moyens de fixation sont constitués par :
- des trous dans le plancher de chaque nacelle à laquelle la passerelle doit être fixée ; et
- des pions placés aux extrémités de la passerelle pour être placés dans ces trous.

Dans sa réalisation préférentielle, cette passerelle est constituée de deux parties de treillis métallique montées pivotantes l'une par rapport à l'autre pour que la passerelle soit escamotable, des moyens de blocage des deux parties en position ouverte étant prévus, et un câble de préhension étant suspendu à chaque extrémité de la passerelle, cette dernière étant destinée à être suspendue à un hélicoptére pour sa mise en place entre deux nacelles placées sur deux câbles aériens.

### LISTE DES FIGURES

La description détaillée d'une réalisation de l'invention est accompagnée de trois figures qui représentent respectivement :
- figure 1, un schéma relatif à l'utilisation de deux nacelles et de la passerelle selon l'invention ;
- figure 2, un schéma plus détaillé d'une nacelle selon l'invention ; et
- figure 3, un schéma détaillé d'une passerelle selon l'invention.

### DESCRIPTION DETAILLEE D'UNE REALISATION DE L'INVENTION

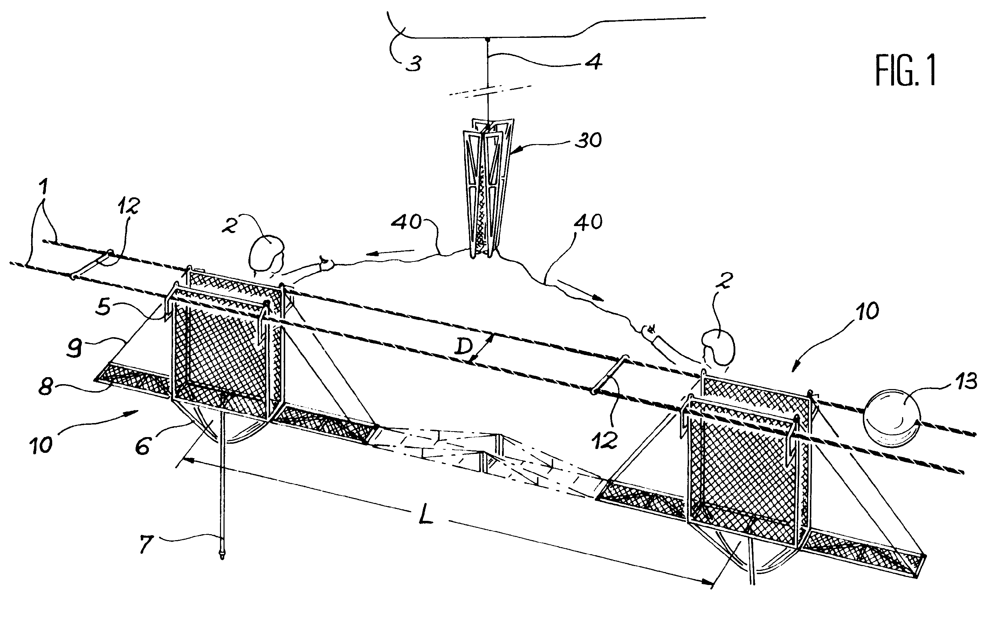

La figure 1 représente les principaux éléments de l'invention dans le cadre de leur application. A cet effet, on a représenté une paire de câbles aériens parallèles 1, en l'occurrence des câbles électriques de distribution d'électricité, deux opérateurs 2 et un hélicoptère 3. Ces deux câbles aériens 1 peuvent faire partie d'un faisceau de trois ou quatre câbles. Le matériel mis en oeuvre sur cette figure est constitué de deux nacelles modulables héliportées 10 et d'une passerelle escamotable héliportée 30.

L'une des principales caractéristiques techniques de la nacelle selon l'invention est qu'elle est héliportée, c'est-à-dire qu'elle est positionnée entre les deux câbles 1 au moyen d'un hélicoptère auquel elle est suspendue par l'intermédiaire d'un filin. On comprend ainsi qu'un ou deux ouvriers puissent venir travailler sur les câbles 1 et plus précisément, positionner des objets, tels que des entretoises 12 ou des balises de signalisation 13, compte tenu de la circulation aérienne dans l'environnement des câbles 1. On note que la distance D séparant deux câbles 1 est connue. En conséquence, les nacelles sont construites avec une largeur légèrement inférieure à cette distance D, de manière à pouvoir être insérées entre les deux câbles 1.

### Nacelle

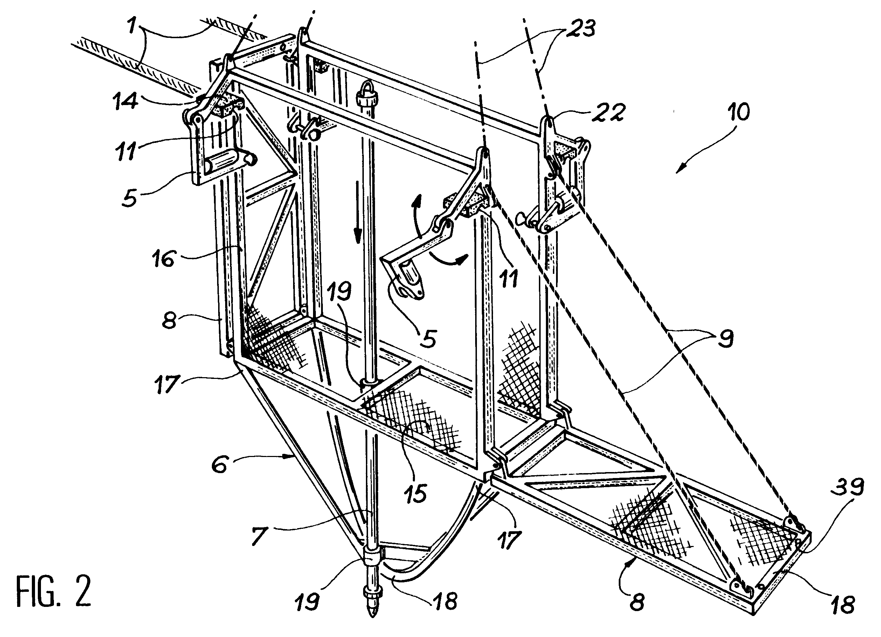

En référence à la figure 2, on constate qu'une nacelle 10 possède des moyens de fixation sur les câbles 1. L'exemple de réalisation, non limitatif, des moyens de fixation représentés sur la figure 2 montre des encoches 11 pratiquées dans des pièces de fixation 14 fixées latéralement par rapport à la nacelle 10, au niveau de sa partie supérieure. Chaque encoche 11 est ouverte vers le bas de manière à ce que la nacelle 10 puisse être posée sur les câbles 1, ceux-ci venant prendre place à l'intérieur des encoches 11. Plusieurs pièces de fixation 14 comprenant des encoches 11 sont ainsi prévues de chaque côté de la nacelle 10.

La nacelle 10 a été représentée sous la forme d'un parallélépipède ; ceci n'est qu'un exemple de réalisation relativement pratique pour le positionnement d'un ou de plusieurs opérateurs entre deux câbles 1, d'autres formes pourraient être envisagées.

La nacelle 10 est constituée principalement d'une structure métallique composée de cornières soudées de manière à offrir une rigidité permettant l'embarquement d'un ou de deux opérateurs et d'un peu de matériel. Elle est complétée d'une ou plusieurs parois réalisées de préférence en treillis métallique. Un plancher 15 peut ainsi être constitué pour permettre aux opérateurs d'évoluer.

La nacelle 10 est suspendue aux élingues 23 du filin de l'hélicoptére au moyen d'anneaux 22 soudés à la partie supérieure de la structure métallique de la nacelle. Dans le cas où la nacelle 10 a une forme parallélépipédique, ces anneaux 22 sont placés aux quatre coins supérieurs.

Le système de fixation constitué des encoches 11 peut être complété avantageusement de crochets amovibles 5. En effet, ces derniers sont constitués d'un bras coudé à 90°, légèrement en saillie des pièces de fixation 14 portant les encoches 11 et montés pivotants autour d'un axe horizontal, parallèle aux câbles 1. Dans une position ouverte, comme le montre l'un des crochets 5, ceux-ci peuvent pivoter de manière à s'écarter de la nacelle 10. En position fermée, ils sont rabattus vers le bas, de manière à emprisonner le câble 1 entre la pièce de fixation 14, un montant 16 vertical de la nacelle 10 et le crochet 5 lui-même. Ainsi, la nacelle 10 est assujettie aux câbles 1, même en cas de mouvements intempestifs inopinés de ceux-ci, l'un d'eux pouvant quitter l'encoche 11 dans laquelle il se trouve sans mettre la nacelle 10 dans une position d'instabilité dangereuse.

La nacelle 10 possède deux parois d'extrémité 8, dont celle de droite est représentée horizontale. En effet, l'aspect escamotable de la nacelle 10 est dû au fait qu'au moins une de ses parois d'extrémité 8 est montée pivotante à l'extrémité du plancher 15, autour d'un axe horizontal à l'extrémité du fond 15. Une paroi d'extrémité 8 peut ainsi, une fois dépliée, constituer un prolongement de ce plancher 15. Le blocage dans la position dépliée des parois d'extrémité 8 peut être assuré par deux câbles de positionnement 9, fixés d'une part, à l'extrémité 18 de la paroi d'extrémité 8 et d'autre part, à la partie supérieure de la structure métallique de la nacelle 10. Ces câbles de positionnement 9 sont placés de préférence sur les côtés de la nacelle 10, de manière à ne pas gêner les mouvements des opérateurs. Ceci est un exemple de moyen de blocage en rotation, d'autres systèmes pouvant être prévus, notamment des butées mécaniques fixées sur la nacelle au niveau de l'articulation de la paroi d'extrémité pivotante 8.

Comme le montre la figure 1, les nacelles 10 ont été descendues par l'hélicoptère 3 entre les deux câbles 1. Pour faciliter cette manoeuvre, on prévoit selon l'invention des éléments de guidage 6 et 7 des nacelles 10 entre les deux câbles 1. La figure 2 montre plus en détail ces moyens de guidage. En effet, la forme parallélépipédique de la cellule 10 impose que celle-ci soit positionnée parallèlement aux câbles 1 avant qu'elle ne soit descendue. Des barres de guidage 6 fixées en dessous du plancher 15 permettent cette orientation de la nacelle 10. Chaque barre de guidage 6 a sa partie supérieure 17 fixée à un coin du plancher 15. Les quatre barres de guidage 6 se réunissent en un sommet 18, formant ainsi un pentahèdre. De manière générale, le volume formé par ces barres de guidage 6 doit avoir une section horizontale qui évolue d'un point à la forme du plancher 15 au fur et à mesure que l'on s'écarte du sommet 18. Lorsque la nacelle 10 est descendue, le sommet 18 est la première partie se trouvant au niveau des câbles 1. Si ce sommet 18 est introduit entre les deux câbles 1, quelle que soit l'orientation de la nacelle 10, les barres de guidage 6 étant inclinées, orientent la nacelle 10 lors de sa descente entre les deux câbles 1 dans la bonne position. Pour faciliter la rotation de la nacelle 10, lorsque celle-ci est en travers par rapport aux câbles 1, deux des quatre barres de guidage 6, diamètralement opposées, peuvent être légèrement bombées vers l'extérieur, les deux autres étant droites.

Pour compléter ces moyens de guidage, on prévoit une tige de guidage escamotable 7 qui prolonge le pentahèdre formé par les barres de guidage 6. Cette tige de guidage 7 est montée coulissante au centre de la nacelle 10 de manière à prolonger le sommet 18, lorsque celle-ci est sortie de la nacelle 10. Elle est montée coulissante dans des anneaux de glissement 19 fixés à la structure de la nacelle 10. La commande de cette tige de guidage 7 peut se faire manuellement par l'opérateur lors de la descente de la nacelle 10.

L'utilisation de cette tige de guidage 7 se fait quand la nacelle 10 est au dessus des câbles 1, avant que le sommet 18 n'atteigne le niveau de ces câbles 1. Lorsque l'opérateur 2 estime que le sommet 18 est en direction de l'espace compris entre les deux câbles 1, il sort la tige de guidage 7 qui pénètre alors entre les deux câbles 1 et permet à la nacelle 10 d'être maintenue en direction de cet espace.

### Passerelle

Le deuxième élément important du concept de l'invention est constitué par la passerelle 30, représentée, en trait fort, dans sa position pliée suspendue par le filin 4 à l'hélicoptère 3 sur la figure 1. Sur cette même figure 1, cette passerelle 30 est représentée, en traits mixtes, dépliée entre les deux nacelles 10. On comprend bien entendu son utilisation qui est de relier les deux planchers 15 des nacelles 10 pour constituer un pont de travail relativement important le long des câbles 1.

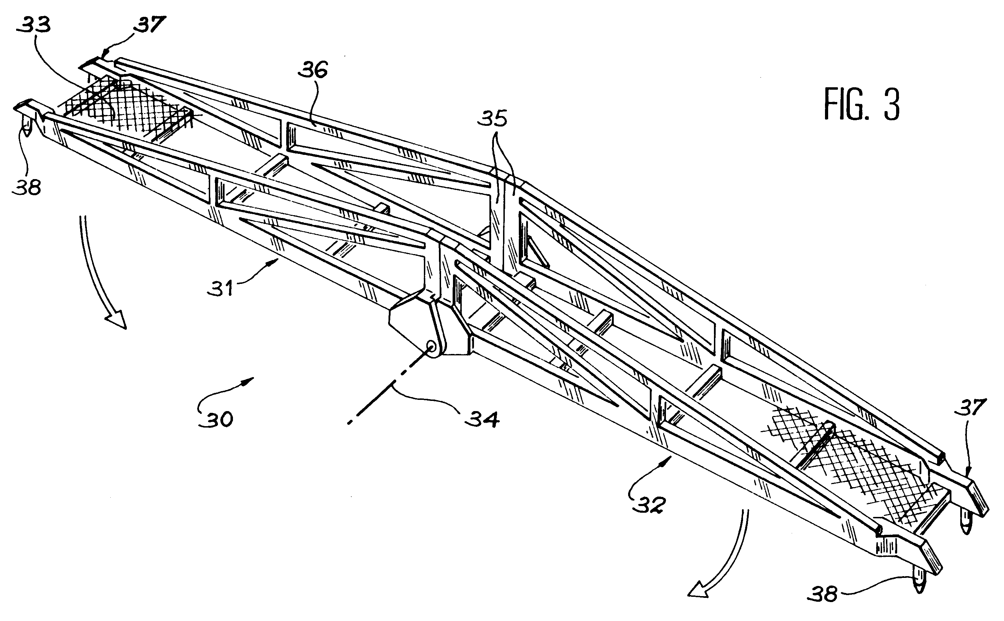

En référence à la figure 3, cette passerelle est constituée de deux parties 31 et 32 montées pivotantes l'une par rapport à l'autre autour d'un axe horizontal 34. Elles sont constituées toutes les deux d'une structure métallique soudée comportant principalement un treillis métallique 33. Lorsqu'elles sont dépliées, leurs treillis métalliques respectifs 33 constituent un seul plancher horizontal. Le blocage en position dépliée se fait à l'aide des montants verticaux 35 placés perpendiculairement aux treillis métalliques 33 au niveau de l'axe de pivotement 34, et qui viennent s'appuyer l'un contre l'autre dans cette position dépliée. Ces montants 35 servent également d'appui à des barres transversales 36 rigidifiant ainsi la structure de la passerelle.

Des moyens de fixation aux nacelles 10 sont prévus aux extrémités 37 de la passerelle 30. De préférence, ces moyens de fixation sont constitués par des pions 38 perpendiculaires aux treillis métalliques 33 et destinés à être introduits dans des trous 39 correspondants prévus à l'extrémité 18 des parois d'extrémité 8 des nacelles 10 (figure 2). L'écartement des trous 39 dans les parois d'extrémité 8 des nacelles 10 ont le même écartement que ceux des pions 38 de la passerelle 30.

### Processus de mise en place

Comme le montre la figure 1, le processus de mise en place des éléments de l'invention est le suivant :
- dépose par l'hélicoptère des nacelles 10 entre les deux câbles 1 à une distance L déterminée en fonction des dimensions des nacelles 10 et de la passerelle 30 ;
- approche par héliportage de la passerelle 30 en position repliée ;
- déploiement de celle-ci au moyen de deux câbles de déploiement 40 par les opérateurs 2 placés sur les nacelles 10 ; et
- positionnement de la passerelle 30 dépliée au moyen des pions 38 et des trous 39 de fixation.

Les nacelles 10 et la passerelle 30 selon l'invention permettent de poser des manchons de jonction ou des entretoises 12 entre les deux câbles 1 d'un faisceau de plusieurs câbles. Elles permettent également de positionner des balises de signalisation 13, des manchons de réparation ou de renforcement, ou d'autres objets sur les câbles 1 et d'effectuer n'importe quelle opération légère d'entretien ou de réparation.

Les nacelles 10 peuvent évidemment être utilisées de manière individuelle, ponctuelle, sans avoir recours à l'utilisation d'une autre nacelle ou d'une passerelle.

## Revendications

1. Nacelle héliportée modulable (10), déposée et suspendue entre deux câbles aériens (1) rapprochés l'un de l'autre d'une distance déterminée (D), la nacelle ayant une largeur légèrement inférieure à ladite distance (D) et comprenant des moyens de fixation aux câbles (1) constitués d'encoches renversées (11) pour recevoir les câbles (1) et placées latéralement par rapport à la structure métallique, la nacelle comprenant deux parois d'extrémité (8), au moins une des deux parois d'extrémité (8) est constituée d'un treillis métallique et est montée pivotante par rapport au plancher (15), pour s'abaisser et constituer un prolongement de ce plancher (15).

2. Nacelle (10) selon la revendication 1, caractérisée en ce qu'elle est composée d'une structure métallique parallélépipédique comportant un plancher (15) pour permettre la présence d'un ou plusieurs opérateurs.

3. Nacelle (10) selon la revendication 2, caractérisée en ce que les encoches renversées (11) sont complétées de crochets (5) pour enfermer chaque câble (1) afin d'assurer la sustentation de la nacelle (10) en cas de mouvements intempestifs des câbles (1).

4. Nacelle (15) selon la revendication 2, caractérisée en ce que deux câbles de positionnement (9) sont prévus à chaque extrémité pour positionner les parois d'extrémité (8) dans le prolongement du plancher (15).

5. Nacelle (10) selon la revendication 1, caractérisée en ce qu'elle comprend des moyens de fixation des parois d'extrémité (8) basculées à un élément de fixation d'une autre structure (30) suspendue aux câbles (1) et devant être fixée à la nacelle (10).

6. Nacelle (10) selon l'une quelconque des revendications précédentes, caractérisée en ce qu'elle comprend des barres de guidage (6) placées en-dessous du plancher (15) de la nacelle (10) et formant un volume dont la section horizontale épouse progressivement la forme du plancher (15) de la nacelle (10) pour écarter les deux câbles aériens (1) lors de la descente de la nacelle (10).

7. Nacelle (10) selon la revendication 6, caractérisée en ce que deux barres de guidage (6) diamétralement opposées sont bombées pour favoriser la rotation de la nacelle (10).

8. Nacelle (10) selon la revendication 6, caractérisée en ce qu'elle comprend une tige verticale de guidage (7) escamotable et prolongeant, en position sortie, le volume délimité par les barres de guidage (6) et pouvant être sortie manuellement à partir d'une position rentrée.

9. Dispositif comprenant une passerelle (30) rigide, héliportée, constituée d'un treillis métallique (33) limité par deux extrémités (37) et fixée par ses deux extrémités (37) à deux nacelles selon la revendication 5, et comprenant des moyens de fixation du treillis métallique (33) à l'extrémité (18) d'une paroi d'extrémité (8) basculée d'une nacelle (10).

10. Dispositif selon la revendication 9, caractérisée en ce que les moyens de fixation de la passerelle sont constitués par :
- des pions (38) placés perpendiculairement au treillis métallique (33) aux extrémités (37) de la passerelle (30) ; et
- des trous (39) prévus aux extrémités (18) des parois d'extrémité (8) des nacelles (10).

11. Dispositif selon la revendication 9 ou 10, caractérisée en ce que la passerelle est constituée de deux parties de treillis métallique (31, 32) montées pivotantes l'une par rapport à l'autre pour que la passerelle (30) soit escamotable et comprenant des moyens de blocage (35) des deux parties (31, 32) en position ouverte et un câble de déploiement (40) étant suspendu à chaque extrémité (37) de la passerelle (30).

## Patentansprüche

1. Hubschraubergetragener modularer Arbeitskorb (10), der zwischen zwei voneinander einen vorbestimmten Abstand (D) aufweisende Freileitungskabel (1) aufgesetzt und aufgehängt ist, wobei der Arbeitskorb eine Breite aufweist, die etwas geringer ist als der genannte Abstand (D), und Mittel zum Fixieren an den Kabeln (1) aufweist, gebildet durch umgekehrte Aussparungen (11) zur Aufnahme der Kabel (1), die seitlich bezüglich einer Metallkonstruktion angeordnet sind, wobei der Arbeitskorb zwei Außenwände (8) aufweist, von denen zumindest eine Außenwand (8) durch ein Metallgitter gebildet wird und schwenkbar bezüglich des Bodens (15) gelagert ist, um abgesenkt zu werden und eine Verlängerung des Bodens (15) zu bilden.

2. Arbeitskorb (10) nach Anspruch 1, **dadurch gekennzeichnet**, daß er aus einer parallelepipedförmigen Metallkonstruktion besteht, die einen Boden (15) für einen oder mehrere Arbeiter trägt.

3. Arbeitskorb (10) nach Anspruch 2, **dadurch gekennzeichnet,** daß die umgekehrten Aussparungen (11) vervollständigt werden durch Haken (5), um das jeweilige Kabel (1) einzuschließen und so das Halten des Arbeitskorbs (10) im Fall ungewollter Bewegungen der Kabel (1) zu gewährleisten.

4. Arbeitskorb (10) nach Anspruch 2, **dadurch gekennzeichnet**, daß an jedem Ende zwei Positionierseile (9) vorgesehen sind, um die Außenwände (8) in der Verlängerung des Bodens (15) zu positionieren.

5. Arbeitskorb (10) nach Anspruch 1, **dadurch gekennzeichnet,** daß er Mittel zum Befestigen der ausgeklappten Außenwände (8) an einem Befestigungselement einer anderen Konstruktion (30) aufweist, die an den Kabeln (1) aufgehängt ist und an dem Arbeitskorb (10) fixiert werden soll.

6. Arbeitskorb (10) nach einem der vorhergehenden Ansprüche, **dadurch gekennzeichnet**, daß er Führungsstangen (6) aufweist, die unterhalb des Bodens (15) des Arbeitskorbs (10) angeordnet sind und ein Volumen bilden, dessen Horizontalquerschnitt sich zunehmend an die Form des Bodens (15) des Arbeitskorbs (10) anpaßt, um beim Absenken des Arbeitskorbs (10) die zwei Freileitungskabel (1) zur Seite zu bewegen.

7. Arbeitskorb (10) nach Anspruch 6, **dadurch gekennzeichnet**, daß zwei einander diametral gegenüberliegende Führungsstangen (6) bauchig ausgebildet sind, um die Drehung des Arbeitskorbs (10) zu begünstigen.

8. Arbeitskorb nach Anspruch 6, **dadurch gekennzeichnet,** daß er einen vertikalen Führungsstab (7) aufweist, der einziehbar ist und in der Ausgangsposition das durch die Führungsstangen (6) begrenzte Volumen verlängert, und der von Hand aus einer zurückgezogenen Stellung ausgefahren werden kann.

9. Vorrichtung, umfassend eine starre, hubschraubergetragene Brücke (30), gebildet aus einem durch zwei Enden (37) begrenzten Metallgitter (33), und mit den beiden Enden (37) an zwei Arbeitskörben gemäß Anspruch 5 befestigt, umfassend Mittel zum Fixieren der Metallgitter (33) am Ende (18) einer ausgeklappten Außenwand (8) eines Arbeitskorbs (10).

10. Vorrichtung nach Anspruch 9, **dadurch gekennzeichnet**, daß die Mittel zum Fixieren der Brücke gebildet werden durch:
- an den Enden (37) der Brücke (30) senkrecht zur dem Metallgitter (33) angeordnete Zapfen (38); und
- in den Enden (18) der Außenwände (8) der Arbeitskörbe (10) vorgesehene Löcher (39).

11. Vorrichtung nach Anspruch 9 oder 10, **dadurch gekennzeichnet**, daß die Brücke gebildet wird durch zwei Metallgitterteile (31, 32), die schwenkbar zueinander gelagert sind, so daß die Brücke (30) zusammenklappbar ist, wobei Mittel zum Verriegeln (35) der beiden Teile (31, 32) in der Offenstellung und ein Aufspreizkabel (40), das an jedem Ende (37) der Brücke (30) aufgehängt ist, vorgesehen sind.

## Claims

1. Modulable helicopter-carried nacelle (10), deposited and suspended between two overhead cables (1) which are at a given distance (D) from one another, the nacelle having a width slightly smaller than the said distance (D) and comprising means for fixing to the cables (1) constituted by inverted slots (11) for receiving the cables (1) and positioned laterally with respect to the metal structure, the nacelle comprising two end walls (8), at least one of the two end walls (8) being constituted by a metal lattice and is mounted so as to pivot relative to the floor (15) so that it can be lowered and constitute an extension of said floor (15).

2. Nacelle (10) according to claim 1, characterized in that it is formed by a parallelepipedic metal structure having a floor (15) to permit the presence of one or more operators.

3. Nacelle (10) according to claim 2, characterized in that the inverted slots (11) are supplemented by hooks (5) for enclosing each cable (1) in order to ensure the suspending of the nacelle (10) in the case of untimely movements of the cables (1).

4. Nacelle (10) according to claim 2, characterized in that two positioning cables (9) are provided at each end for positioning the end walls (8) in the extension of the floor (15).

5. Nacelle (10) according to claim 1, characterized in that it has means for fixing the tilted end walls (8) to a fixing element of another structure (30) suspended on cables (1) and which is to be fixed to the nacelle (10).

6. Nacelle (10) according to any one of the preceding claims, characterized in that it incorporates guide bars (6) placed below the floor (15) of the nacelle (10) and forming a volume, whose cross-section progressively adopts the shape of the floor (15) of the nacelle (10) in order to move apart the two overhead cables (1) during the descent of the nacelle (10).

7. Nacelle (10) according to claim 6, characterized in that two diametrically opposite guide bars (6) are bulged in order to aid the rotation of the nacelle (10).

8. Nacelle (10) according to claim 6, characterized in that it incorporates a retractable, vertical guide bar (7) extending, in the exit position, the volume defined by the guide bars (6) and which can be moved out manually from a retracted position.

9. Device comprising a helicopter-carried, rigid catwalk (30) constituted by a metal lattice (33) bounded by two ends (37) and fixed by its two ends (37) to two nacelles according to claim 5 and comprising means for fixing the metal lattice (33) to the end (18) of a tilted end wall (8) of a nacelle (10).

10. Device according to claim 9, characterized in that the catwalk fixing means are constituted by pins (38) positioned perpendicularly to the metal lattice (33) at the ends (37) of the catwalk (30) and holes (39) provided at the ends (18) of the end walls (8) of the nacelles (10).

11. Device according to claim 9 or 10, characterized in that the catwalk is constituted by two metal lattice parts (31, 32) mounted so as to pivot with respect to one another so that the catwalk (30) is retractable and comprising means (35) for locking the two parts (31, 32) in the open position and an opening-out cable (40) is suspended at each end (37) of the catwalk (30).
